# EUROPÄISCHE PATENTSCHRIFT

(11) **EP 3 545 211 B1**
(45) Veröffentlichungstag und Bekanntmachung des Hinweises auf die Patenterteilung: **06.01.2021**
(21) Anmeldenummer: 17801338.9
(22) Anmeldetag: 14.11.2017
(51) Int. Cl.: F16H 59/70, F16H 63/30

(54) **SCHALTVORRICHTUNG FÜR EIN ZAHNRÄDERWECHSELGETRIEBE**
SHIFTING DEVICE FOR A VARIABLE-SPEED GEARBOX HAVING GEARWHEELS
DISPOSITIF DE PASSAGE DE VITESSE POUR BOÎTE DE VITESSES À ENGRENAGES

(30) Priorität: 24.11.2016 DE 102016223240
(43) Veröffentlichungstag der Anmeldung: 02.10.2019
(73) Patentinhaber: Schaeffler Technologies AG & Co. KG, 91074 Herzogenaurach (DE)
(72) Erfinder: FEUERBACH, Matthias, 97070 Würzburg (DE); THÜRAUF, Christoph, 90419 Nürnberg (DE); LÖFFELMANN, Jochen, 91330 Eggolsheim (DE)
(86) Internationale Anmeldenummer: PCT/DE2017/100958
(87) Internationale Veröffentlichungsnummer: WO 2018/095466

(56) Entgegenhaltungen:
- DE-A1-102009 042 998
- DE-A1-102010 062 136
- DE-A1-102012 102 792
- DE-A1-102015 203 199

## Beschreibung

Die Erfindung betrifft eine Schaltvorrichtung mit einem Signalgeber für ein Zahnräderwechselgetriebe. Eine solche Schaltvorrichtung wird zur Gangerkennung in Getrieben benötigt. Der Signalgeber ist häufig eine Magnetbaugruppe und ist oft mit einer Kunststoffkappe ummantelt. Hiermit soll vermieden werden, dass sich zwischen zwei Magneten des Magnethalters eine "Brücke" aus metallischen Spänen aufbauen kann, was das magnetische Feld verändern würde. Eine solche Kappe kann aufgeclipst werden; möglich ist auch ein Umspritzen des Kunststoffmaterials. Die fertige Baugruppe kann anschließend an der Schaltwelle oder an der Schaltgabel befestigt werden. Eine Möglichkeit ist dabei das Anschrauben mittels einer Schraube.

Eine Schaltvorrichtung der eingangs genannten Art ist aus der DE 10 2007 016 757 A1 bekannt. Hier weist eine Schaltgabel (Schaltvorrichtung) für ein Schaltgetriebe einen am Gabelkörper starr befestigten Sensorarm (Magnethalterträger) auf. Das freie Ende des Sensorarms wird in eine Tasche des Magnethalters eingeführt und darin unter lagegenauer Positionierung des Magnethalters durch eine in die Tasche eingefüllte aushärtbare Masse befestigt.

Auch die DE 10 2007 010 934 A1 offenbart eine gattungsgemäße Schaltvorrichtung. An der Verbindungsstelle zwischen dem Magnethalter und dem Sensorarm sind hier beide Bauteile lagegenau zueinander einstellbar. Anschließend erfolgt auch hier die Festlegung des Magnethalters am Sensorarm mittels einer aushärtbaren Gussmasse. Eine Schaltvorrichtung mit den Merkmalen des Oberbegriffs des Anspruchs 1 ist aus der DE10 2015 203 199 A1 bekannt.

Andere Lösungsmöglichkeiten für die Anbringung eines Magneten bzw. eines Magnethalters an einem Magnethalterträgers einer Schaltvorrichtung zeigen die DE 103 36 971 B3, die DE 20 2005 020 855 U1, die DE 20 2004 014 747 U1 und die DE 20 2004 013 699 U1.

Nachteilig ist bei den vorbekannten Lösungen, dass insbesondere die Montage der Schaltvorrichtung teilweise sehr aufwändig und damit teuer ist. Das gilt insbesondere, wenn die Befestigung mittels einer aushärtbaren Masse erfolgen soll, was jedenfalls einen erheblichen Handhabungsaufwand erfordert.

Des Weiteren sind manche der vorbekannten Ausgestaltungen schwierig in der Herstellung, wenn insbesondere spezielle Geometrien der benötigten Bauteile realisiert werden sollen. Dabei sind vor allem die Möglichkeiten der Blechbearbeitung begrenzt. Ist beispielsweise der Signalgeberträgerkörper auf einer runden Hülse zu verschrauben, muss das Verschrauben gegen eine nicht ebene Fläche erfolgen und erfordert dann in der Regel ergänzende Maßnahmen zur sicheren Fixierung. Alternativ muss meistens eine Adapterfläche bereitgestellt werden, um den Signalgeberträgerkörper zu fixieren.

### Aufgabe der Erfindung

Der vorliegenden Erfindung liegt daher die Aufgabe zugrunde, eine Schaltvorrichtung der eingangs genannten Art so fortzubilden, dass der Montagevorgang einfach und schnell und damit kostengünstig erfolgen kann. Des Weiteren soll die Herstellung der benötigten Teile schnell und einfach und somit wirtschaftlich erfolgen können.

### Zusammenfassung der Erfindung

Die Lösung dieser Aufgabe durch die Erfindung ist dadurch gekennzeichnet, dass der Signalgeberträgerkörper radial unmittelbar an der Schaltwelle und axial ausschließlich indirekt über die Hülse an der Schaltwelle gesichert ist.

Der Signalgeberträgerkörper braucht damit nicht mehr auf der Mantelfläche der Hülse verschraubt oder an dieser stoffschlüssig befestigt werden. Gewindeeinsätze und Schrauben können damit entfallen. Auch der aufgrund der zylindrischen Oberfläche aufwändige Verschraubungsprozess entfällt ersatzlos. Die Erfindung reduziert damit die erforderlichen Bauteile und vereinfacht den Montageprozess. In einer Ausgestaltung der Erfindung ist dadurch auch eine Trennung der radialen Sicherung und der Sicherung in Axial- und/oder Verdrehrichtung möglich.

Der einteilige Signalgeberträgerkörper kann mit Hilfe einer passgenauen Kontur auf der Hülse vorgefügt werden. Der Signalgeberträgerkörper weist zudem Mittel auf, die ihn radial an der Schaltwelle sichern. Dazu kann der Signalgeberträgerkörper ringförmige Aufnahmen als Ringdurchführungen aufweisen, deren Innenkontur der Mantelfläche der Schaltwelle entspricht. Der vorgefügte Signalgeberträgerkörper ist in Bezug auf die Hülse axial und rotativ lagegesichert. Beim anschließenden Aufpressen auf die Schaltwelle wird dann die radiale Lagesicherung hergestellt.

Die Hülse ist vorzugsweise als eine Schalthülse ausgebildet. Dazu kann sie einen oder mehrere Schaltfinger zur Betätigung von Schaltgabel aufweisen. Sie kann ferner als Rastierhülse ausgebildet sein und Konturen beispielsweise in Form von Konturblechen aufweisen, gegen die Schaltarretierungen vorspannbar sind, um den gewünschten Schaltkraftverlauf in der Schaltvorrichtung sicherzustellen. Die Hülse kann aus einem Blech gefertigt und, zu einem Zylinder gebogen sein. Die Blechenden werden dann aneinander fixiert. Alternativ kann die Hülse als ein tiefgezogenes Bauteil hergestellt sein.

Die Hülse braucht nicht vollumfänglich geschlossen ausgebildet sein. So kann ein Blechstreifen auch zu einem U- oder Omega-Profil geformt werden, das rückseitig offen ist. Zur Stabilisierung können die offenen Enden durch separat oder einteilig mit dem Blechstreifen hergestellte, versteifende Elemente verbunden werden.

Die Hülse ist drehfest auf der Schaltwelle angeordnet. Dazu kann sie über eine Innenhülse mit der Schaltwelle verbunden sein. Die Innenhülse weist einen Muffenbereich auf, mit dem sie sich auf der Schaltwelle abstützt, und einen Flansch, über den die Hülse angebunden ist.

Eine besonders kompakte und stabile Anordnung ergibt sich, wenn das Sicherungsmittel des Signalgeberträgerkörpers unmittelbar axial benachbart zu der Innenhülse angeordnet ist. Dazu können ein oder zwei Ringdurchführungen vorgesehen sein. Im Falle zweier Ringdurchführungen ist der axiale Abstand der Ringdurchführungen nur wenig größer, beispielsweise weniger als 20% größer, als die Länge der Innenhülse.

In einer Ausgestaltung der Erfindung weist die Hülse eine Außenkontur auf, die komplementär zur Innenkontur des Signalgeberträgerkörpers ausgebildet ist. Der Signalgeberträgerkörper liegt damit über einen bestimmten Winkelbereich flächig an der Hülse an. Eine derartige Schaltvorrichtung baut kompakt in radialer Richtung.

Der Signalträgerkörper ist ein Bauteil, das vorzugsweise aus einem Kunststoff hergestellt ist. Er kann einen gekapselten Magneten als Signalgeber aufweisen, der beispielsweise in dem Kunststoff vergossen ist. In einer anderen Ausgestaltung kann er eine definierte Fläche zur Anbindung eines separat montierten Signalgebers bereitstellen. Ist die Fläche für unterschiedliche Getriebe genormt, lassen sich über verschiedene Getriebevarianten und Getriebegenerationen die gleichen Sensoren einsetzen, was die Herstellung rationalisiert.

Zur Sicherung an der Schaltwelle weist der Signalgeberträgerkörper Mittel auf, die ihn radial, in Umfangsrichtung und axial an der Hülse oder an der Schaltwelle sichern. Wird die radiale Sicherung über ein oder mehrere Ringdurchführungen vorgenommen, können die in der einfachsten Ausführungsform die Ausnehmung der Ringdurchführung bzw. die Ausnehmungen der Ringdurchführungen der Schaltwellenkontur entsprechen, so dass der Signalgeberträgerkörper in jede radiale Richtung durch die Ringdurchführung bzw. die Ringdurchführungen gesichert ist. Die Sicherungsmittel müssen allerdings nicht als ringförmige Elemente ausgebildet sein. Insbesondere können mehrere Einzelteile erst gemeinsam eine radiale Sicherung bilden. Die axiale Sicherung des Signalgeberträgerkörpers an der Schaltwelle erfolgt über die Hülse. Dazu kann die Hülse einen Schlitz oder eine Ausnehmung aufweisen, in der der Signalgeberträgerkörper formschlüssig gesichert ist. In einer bevorzugten Variante erfolgt der Formschluss über die Mittel, die den Signalgeberträgerkörper radial an der Schaltwelle sichern.

Die Konturen zur axialen Sicherung lassen sich an einer Hülse aus Blech auf besonders einfache Weise durch Stanzen einbringen. Sind die Konturen zur axialen Sicherung stirnseitig an der Hülse angeordnet, bleibt die Hülse besonders steif. Zudem kann vorgesehen sein, dass der Signalgeberträgerkörper mit der Hülse bündig abschließt. Der Signalgeberträgerkörper ragt axial damit nicht über die Hülse hinaus. In einer Ausgestaltung weist er die gleiche axiale Länge wie die Hülse auf und kann diese ggf. verstärken.

In einer weiteren Ausgestaltung weist der Signalgeberträgerkörper eine Ringdurchführung für die Schaltwelle auf, wobei sich an die Ringdurchführung ein Kragen anschließt. In diesem Fall könnte auch auf eine Innenhülse zur Anbindung der Hülse verzichtet werden, weil die Hülse mit dem Signalgeberträgerkörper über diesen fixiert wird.

### Kurze Beschreibung der Figuren

In den Zeichnungen ist ein Ausführungsbeispiel der Erfindung dargestellt. Es zeigen:
- Fig. 1: eine erfindungsgemäße Schaltvorrichtung mit einem Signalgeberträgerkörper in Explosionsdarstellung,
- Fig. 2: die Schaltvorrichtung mit dem Signalgeberträgerkörper nach Figur 1 in perspektivischer Darstellung und
- Fig. 3: die Schaltvorrichtung nach Figur 2 im Längsschnitt.

### Ausführliche Beschreibung der Figuren

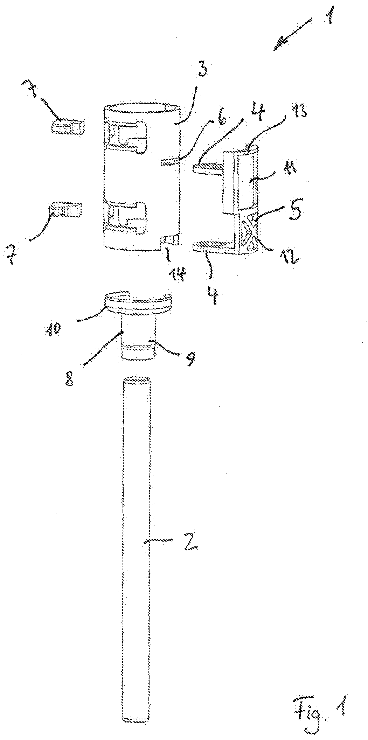

Figur 1 zeigt eine Schaltvorrichtung 1 mit einer vorliegend mit einem runden Querschnitt aufweisenden Schaltwelle 2 zur Betätigung eines Gangräderwechselgetriebes eines Fahrzeugs. Die Schaltwelle 2 ist typischerweise in einem nicht weiter dargestelltem Schaltdom verdrehbar und axial verschiebbar gelagert. Das Ein- und Auslegen der Gänge wird von Schaltgabeln (nicht dargestellt) bewirkt, die ihrerseits über Schaltfinger 7 betätigbar sind.

Die Schaltfinger 7 sind nicht unmittelbar auf der Schaltwelle 2 verschweißt, sondern sie sind auf einer Hülse 3 befestigt, die ihrerseits drehfest auf der Schaltwelle 2 angeordnet ist. Vorliegend ist die Hülse 3 über eine auf der Schaltwelle 2 verpresste Innenhülse 8 mit der Schaltwelle 2 fest verbunden. Die Innenhülse 8 weist dazu zum einen einen Muffenbereich 9 auf, der die Schaltwelle ringförmig umgibt und mit dem sich die Innenhülse 8 auf der Schaltwelle 2 abstützt. Zum anderen besitzt die Innenhülse einen Flansch 10, dessen Durchmesser dem Durchmesser der Hülse 3 entspricht, um diese anzubinden.

Die Hülse 3 ist aus einem abgelängten Blechstreifen hergestellt. Der Blechstreifen wird einem Zylinder gerollt, und die Blechenden werden in Längsrichtung der Zylindermantelfläche verbunden.

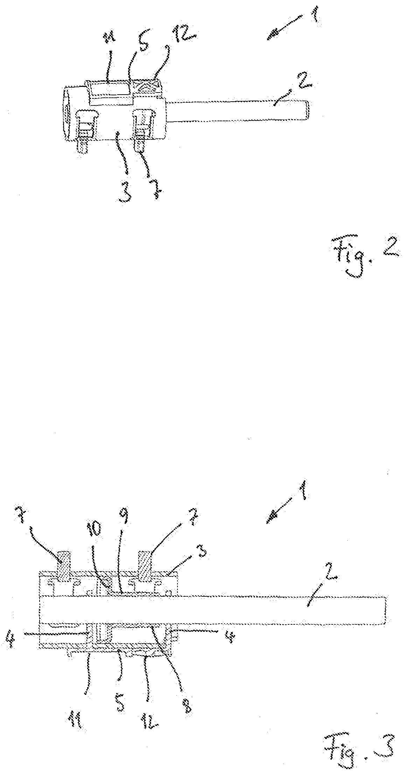

Wie insbesondere die Figuren 2 und 3 zeigen, ist auf der Hülse 3 ein Signalgeberträgerkörper 5 angeordnet. Der Signalgeberträgerkörper 5 ist in der Regel aus einem anderen Werkstoff als die Hülse ausgebildet, da er zum einen nicht mechanisch belastet ist, zum anderen leicht bauen soll und eine geeignete Anbindung eines nicht dargestellten Signalgebers gewährleisten soll. Ist der Signalgeber beispielsweise ein Magnet, sollte der Signalgeberträgerkörper 5 aus einem magnetisch nicht leitfähigen Material bestehen. Vorteilhafterweise ist der Signalgeberträgerkörper 5 aus Kunststoff ausgebildet.

Der Signalgeberträgerkörper 5 weist abgesehen von zwei Ringdurchführungen 4 in Richtung der Hülse eine gekrümmte Oberfläche auf. Die Krümmung entspricht der der Hülse 3, so dass der Signalgeberträgerkörper 5 plan an der Hülse anliegt. Radial nach außen weist der Signalgeberträgerkörper 5 eine hier rechteckförmige, ebene Aufnahme 11 für den Signalgeber auf, die sich axial nicht vollständig über den Signalgeberträgerkörper 5 erstreckt, sondern von einem auch nach außen gewölbten Blindstück 12 benachbart ist. Die Aufnahme weist eine rahmenförmige Einfassung 13 für den Signalgeber auf. Ein derartiger Signalgeberträgerkörper 5 lässt sich aus Spritzguss unaufwändig herstellen.

Um den Signalgeberträgerkörper 5 auf unaufwändige Weise und trotz eines Werkstoffs, der einen anderen Temperaturausdehnungskoeffizienten als die übrigen Werkstoffe der Schaltvorrichtung hat, sicher an die Schaltwelle anzubinden, weist er die zwei Ringdurchführungen 4 auf. Die Ringdurchführungen 4 weisen kreisringförmige Ausnehmungen auf, deren Durchmesser dem der Schaltwelle entspricht. Damit ist der Signalgeberträgerkörper 5 an der Schaltwelle 2 radial gesichert. Gleichzeitig greift eine der Ringdurchführungen 4 in einen Schlitz 6 der Hülse 3 ein. Der Schlitz 6 bildet mit der einen Ringdurchführung 4 eine Verdrehsicherung und eine Sicherung in Axialrichtung.

Zusätzlich ist der Signalgeberträgerkörper 5 über die zweite Ringdurchführung 4 an der Hülse 3 gesichert. Dazu weist die Hülse 3 endseitig eine Einkerbung 14 auf, die die die Ringdurchführung 4 formschlüssig eingreift.

Vorliegend fassen beide Ringdurchführungen 4 die Innenhülse 8 axial ein und ermöglichen eine kompakte und stabile Baueinheit.

Für die Montage des Signalgeberträgerkörpers 5 mit dem Signalgeber in der Schaltvorrichtung 1 ist es vorteilhaft, den Signalgeberträgerkörper 5 mit dem Signalgeber auf der Hülse passgenau vorzufügen. Weist die Hülse 3 einen Schlitz auf, in den ein Teil des Signalgeberträgerkörpers 5 eingreifen kann, ist das problemlos möglich. Wird die Hülse 3 dann auf der Schaltwelle 2 direkt oder indirekt verpresst, wird automatisch eine radiale Lagesicherung über die Welle hergestellt.

### Bezugszeichenliste

- 1: Schaltvorrichtung
- 2: Schaltwelle
- 3: Hülse
- 4: Ringdurchführung
- 5: Signalgeberträgerkörper
- 6: Schlitz
- 7: Schaltfinger
- 8: Innenhülse
- 9: Muffenbereich
- 10: Flansch
- 11: Aufnahme
- 12: Blindstück
- 13: Einfassung
- 14: Einkerbung

## Patentansprüche

1. Schaltvorrichtung (1), aufweisend
eine Schaltwelle (2),
eine Hülse (3), die drehfest auf der Schaltwelle (2) angeordnet ist,
einen Signalgeberträgerkörper (5) für einen Signalgeber, wobei der Signalgeberträgerkörper (5) axial über die Hülse (3) an der Schaltwelle (2) gesichert ist,
**dadurch gekennzeichnet, dass**
der Signalgeberträgerkörper (5) radial unmittelbar an der Schaltwelle gesichert ist.

2. Schaltvorrichtung nach Anspruch 1, **dadurch gekennzeichnet, dass** der Signalgeberträgerkörper (5) eine Innenkontur aufweist, welche komplementär zur Außenkontur der Hülse (3) ausgebildet ist.

3. Schaltvorrichtung nach Anspruch 1 oder 2, **dadurch gekennzeichnet, dass** der Signalgeberträgerkörper (5) mittels einer Ringdurchführung (4) an der Schaltwelle (2) gehaltert ist.

4. Schaltvorrichtung nach Anspruch 3, **dadurch gekennzeichnet, dass** die Innenkontur der Ringdurchführung (4) der Außenkontur der Schaltwelle (2) entspricht.

5. Schaltvorrichtung nach Anspruch 3 oder 4, **dadurch gekennzeichnet, dass** der Signalgeberträgerkörper (5) mittels der Ringdurchführung (4) axial an der Hülse (3) gehalten ist.

6. Schaltvorrichtung nach Anspruch 5, **dadurch gekennzeichnet, dass** die Hülse (3) einen Schlitz (6) aufweist, in dem die Ringdurchführung (4) aufgenommen ist.

7. Schaltvorrichtung nach Anspruch 2 oder 3, **dadurch gekennzeichnet, dass** der Signalgeberträgerkörper (5) eine, zwei oder mehr als zwei Ringdurchführungen (4) aufweist.

8. Schaltvorrichtung nach einem der Ansprüche 1 bis 7, **dadurch gekennzeichnet, dass** der Signalgeberträgerkörper (5) aus Kunststoff ausgebildet ist und einen Magneten als Signalgeber aufweist.

9. Verfahren zur Herstellung einer Schaltvorrichtung (1) nach einem der Ansprüche 1 bis 8, **dadurch gekennzeichnet, dass** der Signalgeberträgerkörper (5) auf der Hülse (3) vorgefügt wird und dass die Hülse (3) auf die Schaltwelle (2) aufgepresst wird.

## Claims

1. A shifting device (1), having
a shifting shaft (2),
a sleeve (3) which is non-rotatably arranged on the shifting shaft (2),
a signal transmitter support body (5) for a signal transmitter, wherein the signal transmitter support body (5) is axially secured via the sleeve (3) on the shifting shaft (2), **characterised in that** the signal transmitter support body (5) is radially secured directly on the shifting shaft.

2. The shifting device according to claim 1, **characterised in that** the signal transmitter support body (5) has an inner contour which is designed to be complementary to the outer contour of the sleeve (3).

3. The shifting device according to claim 1 or 2, **characterised in that** the signal transmitter support body (5) is held on the shifting shaft (2) by means of a ring bushing (4).

4. The shifting device according to claim 3, **characterised in that** the inner contour of the ring bushing (4) corresponds to the outer contour of the shifting shaft (2).

5. The shifting device according to claim 3 or 4, **characterised in that** the signal transmitter support body (5) is held axially on the sleeve (3) by means of the ring bushing (4).

6. The shifting device according to claim 5, **characterised in that** the sleeve (3) has a slot (6) in which the ring bushing (4) is received.

7. The shifting device according to claim 2 or 3, **characterised in that** the signal transmitter support body (5) has one, two or more than two ring bushings (4).

8. The shifting device according to any one of claims 1 to 7, **characterised in that** the signal transmitter support body (5) is made of plastic and has a magnet as a signal transmitter.

9. A method for producing a shifting device (1) according to any one of claims 1 to 8, **characterised in that** the signal transmitter support body (5) is pre-positioned on the sleeve (3) and that the sleeve (3) is pressed onto the shifting shaft (2).

## Revendications

1. Dispositif de passage de vitesse (1), comprenant
un arbre de passage de vitesse (2),
un manchon (3) disposé de manière non rotative sur l'arbre de passage de vitesse (2), un corps de support d'émetteur de signaux (5) pour un émetteur de signaux, le corps de support d'émetteur de signaux (5) étant bloqué sur l'arbre de passage de vitesse (2) dans le sens axial par l'intermédiaire du manchon (3), **caractérisé en ce que** le corps de support d'émetteur de signaux (5) est bloqué directement sur l'arbre de passage de vitesse dans le sens radial.

2. Dispositif de passage de vitesse selon la revendication 1, **caractérisé en ce que** le corps de support d'émetteur de signaux (5) présente un contour intérieur qui est conçu pour être complémentaire du contour extérieur du manchon (3).

3. Dispositif de passage de vitesse selon la revendication 1 ou 2, **caractérisé en ce que** le corps de support d'émetteur de signaux (5) est maintenu sur l'arbre de passage de vitesse (2) au moyen d'un passage annulaire (4).

4. Dispositif de passage de vitesse selon la revendication 3, **caractérisé en ce que** le contour intérieur du passage annulaire (4) correspond au contour extérieur de l'arbre de passage de vitesse (2).

5. Dispositif de passage de vitesse selon la revendication 3 ou 4, **caractérisé en ce que** le corps de support d'émetteur de signaux (5) est maintenu sur le manchon (3) dans le sens axial au moyen du passage annulaire (4).

6. Dispositif de passage de vitesse selon la revendication 5, **caractérisé en ce que** le manchon (3) présente une fente (6) dans laquelle est logé le passage annulaire (4).

7. Dispositif de passage de vitesse selon la revendication 2 ou 3, **caractérisé en ce que** le corps de support d'émetteur de signaux (5) comporte un, deux ou plus de deux passages annulaires (4).

8. Dispositif de passage de vitesse selon l'une quelconque des revendications 1 à 7, **caractérisé en ce que** le corps de support d'émetteur de signaux (5) est en matière plastique et comporte un aimant comme émetteur de signaux.

9. Procédé de fabrication d'un dispositif de passage de vitesse (1) selon l'une quelconque des revendications 1 à 8, **caractérisé en ce que** le corps de support d'émetteur de signaux (5) est pré-positionné sur le manchon (3) et **en ce que** le manchon (3) est pressé sur l'arbre de passage de vitesse (2).
